# EUROPEAN PATENT SPECIFICATION

(11) **EP 2 716 513 B1**
(45) Date of publication and mention of the grant of the patent: **25.04.2018**
(21) Application number: 12788898.0
(22) Date of filing: 14.05.2012
(51) Int. Cl.: B60T 8/17, B60T 11/16

(54) **STROKE SIMULATOR, MASTER CYLINDER HAVING STROKE SIMULATOR, AND BRAKE SYSTEM USING MASTER CYLINDER**
HUBSIMULATOR, HAUPTZYLINDER MIT DEM HUBSIMULATOR UND BREMSANLAGE MIT DEM HAUPTZYLINDER
SIMULATEUR DE COURSE, MAÎTRE-CYLINDRE ÉQUIPÉ D'UN SIMULATEUR DE COURSE ET SYSTÈME DE FREIN UTILISANT UN MAÎTRE-CYLINDRE

(30) Priority: 23.05.2011 JP 2011114594
(43) Date of publication of application: 09.04.2014
(73) Proprietor: Robert Bosch GmbH, 70469 Stuttgart (DE)
(72) Inventor: HIROSE, Kouki, Hiki-gun Saitama 355-0813 (JP)
(74) Representative: DREISS Patentanwälte PartG mbB
(86) International application number: PCT/JP2012/062303
(87) International publication number: WO 2012/161016

(56) References cited:
- EP-A1- 1 167 148
- EP-A1- 1 418 105
- EP-A1- 1 634 787
- EP-B1- 1 324 902
- WO-A1-2005/007476
- DE-A1- 19 832 036
- JP-A- 4 283 157
- JP-A- 11 334 577
- JP-A- 2000 280 877
- JP-A- 2001 301 591
- JP-A- 2004 528 214
- JP-A- 2005 112 034
- JP-A- 2006 248 473

## Description

### Technical Field

The present invention relates to the technical field of a stroke simulator that generates a reaction force based on a stroke of an input shaft used in a brake system or the like, the technical field of a master cylinder having this stroke simulator, and the technical field of a brake system using this master cylinder. In the description of the specification of the present invention, the relationship between front and rear directions will be such that "front" means the direction in which the input shaft moves when a brake pedal is depressed and "rear" means the direction in which the input shaft returns when the brake pedal is released.

### Background Art

The development of hybrid cars and electric automobiles is progressing in relation to automobiles such as passenger cars. In accompaniment with this, a variety of cooperative regenerative braking systems, in which regenerative brakes and friction brakes are cooperatively used, are being developed in relation to brake systems for automobiles. These cooperative regenerative braking systems detect the depression stroke of the brake pedal, a control unit (Electronic control unit: ECU) computes the braking force resulting from the regenerative brakes and the braking force resulting from the friction brakes on the basis of the detected stroke, and brakes are applied to the automobile using the computed braking forces.

In such cooperative regenerative braking systems, the control unit decides the braking forces on the basis of the depression stroke of the brake pedal, so a reaction force corresponding to the depression stroke of the brake pedal is not transmitted to the driver. Therefore, in order to make it possible for the driver to perceive a reaction force corresponding to the depression stroke of the brake pedal, a master cylinder having a pedal feel simulator unit has been proposed (e.g., see PTL 1).

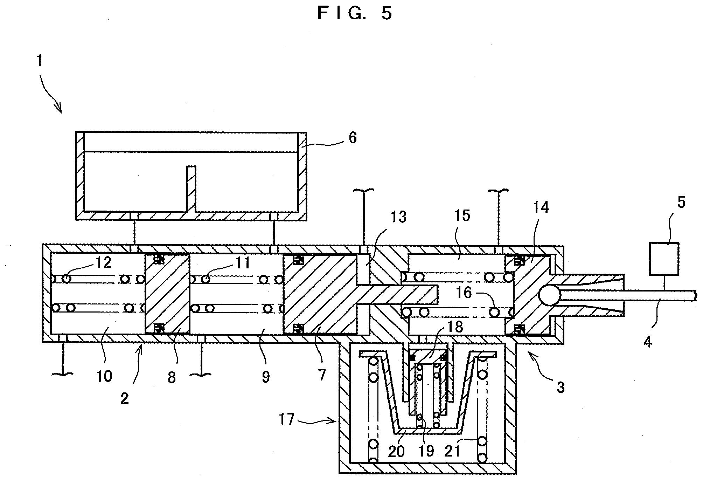

FIG. 5 is a drawing schematically showing the master cylinder having the pedal feel simulator unit described in PTL 1. In the drawing, 1 is a master cylinder, 2 is a tandem master cylinder unit that generates brake hydraulic pressure for friction brakes, 3 is a pedal feel simulator unit that is integrally disposed in the tandem master cylinder unit 2, 4 is an input shaft that performs a stroke in accordance with the depression of a brake pedal (not shown in FIG. 5), 5 is a stroke sensor that detects the stroke of the input shaft 4, and 6 is a reservoir tank that holds brake fluid.

The tandem master cylinder unit 2 has, like a conventionally well-known tandem master cylinder, a primary piston 7, a secondary piston 8, a primary hydraulic chamber 9 that is defined by the primary piston 7 and the secondary piston 8, a secondary hydraulic chamber 10 that is defined by the secondary piston 8, a primary spring 11 that always biases the primary piston 7 toward a non-actuated position, and a secondary spring 12 that always biases the secondary piston 8 toward a non-actuated position. The primary hydraulic chamber 9 is connected to brake cylinders of one brake system (not shown in FIG. 5) and is also communicatively connected to the reservoir tank 6 in the non-actuated position of the primary piston 7 shown in the drawing. Additionally, when the primary piston 7 moves forward, the primary hydraulic chamber 9 becomes cut off from the reservoir tank 6 and brake hydraulic pressure is generated in the primary hydraulic chamber 9. The secondary hydraulic chamber 10 is connected to brake cylinders of another brake system (not shown in FIG. 5) and is also communicatively connected to the reservoir tank 6 in the non-actuated position of the secondary piston 8 shown in the drawing. Additionally, when the secondary piston 8 moves forward, the secondary hydraulic chamber 10 becomes cut off from the reservoir tank 6 and brake hydraulic pressure is generated in the secondary hydraulic chamber 10.

Moreover, the tandem master cylinder unit 2 has a power chamber 13 between the primary piston 7 and a cylinder wall. Hydraulic fluid is supplied to this power chamber 13 from an unillustrated power source at the time of brake actuation. In that case, the hydraulic fluid is supplied in such a way that the hydraulic pressure in the power chamber 13 becomes a hydraulic pressure corresponding to the braking force resulting from the friction brakes computed by the control unit.

The pedal feel simulator unit 3 is a stroke simulator that simulates a reaction force with respect to the pedal stroke. This pedal feel simulator unit 3 has a simulator actuation piston 14 that is actuated (performs a stroke) by the stroke of the input shaft 4, a simulator actuation hydraulic chamber 15 in which simulator actuation hydraulic pressure is generated by the actuation of the simulator actuation piston 14, a simulator actuation piston return spring 16 comprising a coil spring that always biases the simulator actuation piston 14 toward a non-actuated position, and a pedal feel simulator cartridge 17. Further, the pedal feel simulator cartridge 17 has a first reaction force simulator piston 18 on which the simulator actuation hydraulic pressure in the simulator actuation hydraulic chamber 15 acts, a first reaction force simulator spring 19 that always biases the first reaction force simulator piston 18 toward a non-actuated position, a second reaction force simulator piston 20 that supports the first reaction force simulator spring 19, and a second reaction force simulator spring 21 that always biases the second reaction force simulator piston 20 toward a non-actuated position.

In this pedal feel simulator unit 3, during non-actuation when the brake pedal is not depressed, no input is applied to the input shaft 4 and the input shaft 4 does not perform a stroke . Because of this, the simulator actuation piston 14 does not perform a stroke and is in the non-actuated position shown in FIG. 5. In this state, the simulator actuation hydraulic chamber 15 is communicatively connected to the reservoir tank 6, and the inside of the simulator actuation hydraulic chamber 15 is at atmospheric pressure without simulator actuation hydraulic pressure being generated. Consequently, the first reaction force simulator piston 18 and the second reaction force simulator piston 20 are in the non-actuated positions shown in FIG. 5.

Then, when the brake pedal is depressed, an input is applied to the input shaft 4 and the input shaft 4 performs a forward stroke (moves to the left in FIG. 5). When this happens, the simulator actuation piston 14 performs a forward stroke (is actuated) while causing the simulator actuation piston return spring 16 to elastically flex. When the simulator actuation hydraulic chamber 15 becomes cut off from the reservoir tank 6 by the actuation of the simulator actuation piston 14, simulator actuation hydraulic pressure is generated inside the simulator actuation hydraulic chamber 15. This simulator actuation hydraulic pressure acts on the first reaction force simulator piston 18. When the simulator actuation hydraulic pressure increases to a predetermined hydraulic pressure, because of this simulator actuation hydraulic pressure, the first reaction force simulator piston 18 moves (is actuated) downward in FIG. 5 while pressing and causing the first reaction force simulator spring 19 to elastically flex, and because of the pressing force of the first reaction force simulator piston 18, the second reaction force simulator piston 20 moves (is actuated) downward in FIG. 5 while causing the second reaction force simulator spring 21 to flex. Because of this, forces corresponding to the amounts the first and second reaction force simulator springs 19 and 21 flex act as reaction forces on the first reaction force simulator piston 18.

Then, when the force acting on the first reaction force simulator piston 18 resulting from the simulator actuation hydraulic pressure and the force acting on the first reaction force simulator piston 18 resulting from the first reaction force simulator spring 19 balance one another out, the movement of the first and second reaction force simulator pistons 18 and 20 stops. At this time, the simulator actuation hydraulic pressure inside the simulator actuation hydraulic chamber 15 becomes a hydraulic pressure corresponding to (based on) the stroke of the input shaft 4 (in other words, the depression stroke of the brake pedal). Then, the reaction force of the first reaction force simulator piston 18 is converted to simulator hydraulic actuation pressure and acts on the simulator actuation piston 14, and the reaction force is transmitted from the simulator actuation piston 14 via the input shaft 4 to the brake pedal. Because of this, the driver perceives, from the brake pedal, the reaction force corresponding to the depression stroke of the brake pedal.

In this master cylinder 1, during non-actuation when the brake pedal is not depressed, the tandem master cylinder unit 2 and the pedal feel simulator unit 3 are both in the non-actuated state shown in FIG. 5. That is, the hydraulic fluid is not supplied from the power source to the power chamber 13, and the primary piston 7 and the secondary piston 8 are both in the non-actuated positions shown in FIG. 5. Consequently, the primary hydraulic chamber 9 and the secondary hydraulic chamber 10 are both communicatively connected to the reservoir tank 6, and brake hydraulic pressures are not generated inside the primary hydraulic chamber 9 and the secondary hydraulic chamber 10. Further, the simulator actuation hydraulic chamber 15 is communicatively connected to the reservoir tank 6, and simulator actuation hydraulic pressure is not generated inside the simulator actuation hydraulic chamber 15.

Further, when the brake pedal is depressed, the input shaft 4 performs a forward stroke. This stroke of the input shaft 4 is detected by the stroke sensor 5. An unillustrated control unit controls the driving of the power source on the basis of the stroke of the input shaft 4 from the stroke sensor 5 (in other words, the depression stroke of the brake pedal) . Because of this, the hydraulic fluid is supplied from the power source to the power chamber 13, and the primary piston 7 and the secondary piston 8 move forward. When this happens, the primary hydraulic chamber 9 and the secondary hydraulic chamber 10 both become cut off from the reservoir tank 6, and brake hydraulic pressures are generated inside the primary hydraulic chamber 9 and the secondary hydraulic chamber 10. These brake hydraulic pressures are supplied to the corresponding brake cylinders of the two systems, and brakes are applied to the corresponding wheels of the automobile.

When the actuation hydraulic pressure inside the power chamber 13 becomes a hydraulic pressure corresponding to the depression stroke of the brake pedal, the control unit stops the power source. When this happens, the primary piston 7 and the secondary piston 8 both stop, and the brake hydraulic pressures inside the primary hydraulic chamber 9 and the secondary hydraulic chamber 10 both become hydraulic pressures corresponding to the depression stroke of the brake pedal. That is, brakes are applied to the wheels using braking forces corresponding to the depression stroke of the brake pedal.

At this time, as described above, the pedal feel simulator unit 3 transmits to the brake pedal the reaction force corresponding to the depression stroke of the brake pedal. Consequently, the driver perceives this reaction force and senses that brakes are being applied to the wheels using braking forces corresponding to the depression stroke of the brake pedal.

When the brake pedal is released, the input shaft 4 performs a rearward stroke (toward the non-actuated position), and this stroke of the input shaft 4 is detected by the stroke sensor 5. The control unit controls an unillustrated control valve on the basis of the stroke detected by the stroke sensor 5 to discharge the hydraulic fluid inside the power chamber 13 to the reservoir tank 6. Because of this, the hydraulic pressure inside the power chamber 13 drops, and the primary piston 7 and the secondary piston 8 move rearward because of the biasing forces of the primary spring 11 and the secondary spring 12, respectively. When the hydraulic pressure inside the power chamber 13 becomes atmospheric pressure, the primary piston 7 and the secondary piston 8 both move to the non-actuated positions shown in FIG. 5, and the braking of the wheels is released.

When the input shaft 4 performs the rearward stroke, the simulator actuation piston 14 moves rearward because of the biasing force of the simulator actuation piston return spring 16. Then, when the simulator actuation piston 14 reaches the neighborhood of the non-actuated position, the simulator actuation hydraulic chamber 15 becomes communicatively connected to the reservoir tank 6 and the simulator actuation hydraulic pressure inside the simulator actuation hydraulic chamber 15 drops . In the state in which the simulator actuation piston 14 has reached the non-actuated position shown in FIG. 5, the hydraulic pressure in the simulator actuation hydraulic chamber 15 becomes atmospheric pressure. Because of this, the first reaction force simulator piston 18 and the second reaction force simulator piston 20 both move to the non-actuated positions shown in FIG. 5. The terms and reference signs used for the constituent elements herein are not the same terms and reference signs as those described in PTL 1.

### Citation List

### Patent Literature

PTL 1: Japanese Patent No. 4,510,388
EP 1 324 902 B1 discloses an actuating travel simulator.
EP 1 418 105 A1 discloses a device and a method for simulation of a pedal behavior.
EP 1634 787 A1 discloses a braking system.
EP 1 167 148 A1 discloses a method and apparatus for calculating actuation control.
WO 2005/007476A1 discloses an electrohydraulic brake system.

### Summary of Invention

### Technical Problem

Incidentally, the pedal feel simulator unit 3 described in PTL 1 has plural springs comprising the simulator actuation piston return spring 16, the first reaction force simulator spring 19, and the second reaction force simulator spring 21. In order for the pedal feel simulator unit 3 to start up (in order for actuation to commence), these plural springs must flex and the simulator actuation piston 14 must be actuated by the depression stroke of the brake pedal.

For this reason, the force with which the actuation of the simulator actuation piston 14 commences becomes larger. In other words, the start-up load of the pedal feel simulator unit 3 becomes larger. Consequently, it is difficult to smoothly commence actuation of the stroke simulation function. Further, the depression load of the brake pedal becomes heavier, a feeling of resistance caused by the spring forces of the plural springs arises, and it is difficult to obtain a good pedal feeling compared to a conventional, typical brake system where the reaction force of the braking force is transmitted to the brake pedal.

Further, because the pedal feel simulator cartridge 17 of the pedal feel simulator unit 3 is disposed, not only does the master cylinder become larger in size but there is also the problem that space for installing the pedal feel simulator cartridge 17 of the pedal feel simulator unit 3 becomes necessary.

The present invention has been made in view of these circumstances, and it is an object thereof to provide a stroke simulator with which a good pedal feeling can be obtained by more smoothly commencing actuation of a stroke simulation function and which can be formed compactly, a master cylinder having this stroke simulator, and a brake system using this master cylinder.

### Solution to Problem

In order to solve the above problem, a stroke simulator pertaining to the present invention comprises: an input shaft that performs a stroke as a result of an input being applied thereto; a simulator actuation piston that performs a stroke because of the stroke of the input shaft; a simulator actuation hydraulic chamber in which simulator actuation hydraulic pressure that applies a reaction force based on the stroke of the input shaft to the simulator actuation piston is generated by the stroke of the simulator actuation piston; and a hydraulic actuation control system that controls the simulator actuation hydraulic pressure on the basis of the stroke of the input shaft by controlling the supply and discharge of hydraulic fluid to and from the simulator actuation hydraulic chamber.

Further, in the stroke simulator pertaining to the present invention, the hydraulic actuation control system has a first flow rate control valve that supplies the hydraulic fluid to the simulator actuation hydraulic chamber and a second flow rate control valve that discharges the hydraulic fluid in the simulator actuation hydraulic chamber.

Moreover, in the stroke simulator pertaining to the present invention, the valve lift of the first flow rate control valve is controlled on the basis of the stroke of the input shaft, and the valve lift of the second flow rate control valve is controlled on the basis of the stroke of the input shaft.

Moreover, in the stroke simulator pertaining to the present invention, when the input shaft has performed a stroke as a result of the input being applied thereto, the first flow rate control valve is closed and the second flow rate control valve is opened.

Moreover, in the stroke simulator pertaining to the present invention, the valve lift of the second flow rate control valve is set to an extremely small first valve lift when the stroke of the input shaft has become a first stroke, is set to a second valve lift larger than the first valve lift when the hydraulic pressure inside the simulator actuation hydraulic chamber has become a predetermined hydraulic pressure determined beforehand, and is set to become smaller from the second valve lift together with a further increase in the stroke of the input shaft from when the stroke of the input shaft has become a second stroke larger than the first stroke.

Moreover, in the stroke simulator pertaining to the present invention, when the input shaft has performed a return stroke, the first flow rate control valve is opened and the second flow rate control valve is closed.

Moreover, a master cylinder pertaining to the present invention comprises a stroke simulator that outputs a reaction force based on an input of an input shaft and a master cylinder piston that is actuated by hydraulic fluid from a hydraulic actuation control system and generates hydraulic pressure based on the input of the input shaft, wherein the stroke simulator is the stroke simulator according to any one of the above stroke simulators of the present invention.

Moreover, a brake system pertaining to the present invention comprises a brake pedal, a master cylinder which, as a result of an input shaft performing a stroke on the basis of the depression of a brake pedal, generates brake hydraulic pressure based on the depression of the brake pedal, and brake cylinders that generate braking forces using the brake hydraulic pressure generated by the master cylinder, wherein the master cylinder is the above master cylinder of the present invention.

### Advantageous Effects of Invention

According to the stroke simulator pertaining to the present invention configured in this way and the master cylinder and brake system having the stroke simulator, the hydraulic actuation control system has the stroke simulation function. Because of this, the pedal feel simulator cartridge described in PTL 1 for performing the stroke simulation function becomes unnecessary. Additionally, the plural springs disposed in the pedal feel simulator cartridge described in PTL 1 are not disposed, so the start-up load of the stroke simulator can be reduced. Consequently, the stroke simulator of the present invention can smoothly commence actuation of the stroke simulation function.

Further, the input of the input shaft for commencing actuation of the simulation actuation piston can be lightened, and the feeling of resistance caused by the spring forces of the plural springs can be reduced. As a result, a good pedal feeling that is the same as that of a conventional, typical brake system where the reaction force of the braking force is transmitted to the brake pedal can be obtained. In particular, the simulator actuation hydraulic pressure that applies a reaction force based on the stroke of the input shaft to the simulator actuation piston that performs a stroke because of the stroke of the input shaft is generated in the simulator actuation hydraulic chamber. In that case, the hydraulic fluid supplied to the simulator actuation hydraulic chamber moves while its flow rate is controlled by the first and second flow rate control valves, so a response delay caused by volumetric movement of the hydraulic fluid arises. However, this response delay of the hydraulic fluid becomes an alternative to the response delay in a conventional, typical negative-pressure brake system, so it becomes possible to realize the pedal feeling of a conventional negative-pressure brake system.

Moreover, the stroke simulator and the master cylinder can be compactly formed as a result of the pedal feel simulator cartridge described in PTL 1 not being disposed, and the space for installing these can be reduced.

Moreover, the amount of change of the capacity of the simulator actuation hydraulic chamber and the rate of change of the capacity can be controlled as a result of the valve lifts of the first and second flow rate control valves being controlled on the basis of the stroke of the input shaft. Consequently, the hydraulic pressure of the hydraulic fluid in the simulator actuation hydraulic chamber, or in other words the reaction force, can be easily controlled on the basis of the stroke of the input shaft. Moreover, by setting the magnitudes of the valve lifts of the first and second flow rate control valves to desired magnitudes, it becomes possible to easily adjust the reaction force characteristics with respect to the stroke of the input shaft to desired characteristics.

### Brief Description of Drawings

FIG. 1 is a drawing schematically showing a master cylinder having an example of an embodiment of a stroke simulator pertaining to the present invention and a brake system using this master cylinder;
FIG. 2 is a block diagram for controlling brake actuation in the brake system of the example shown in FIG. 1;
FIG. 3 is a characteristic diagram of a reaction force with respect to a stroke of a brake pedal;
FIG. 4 is a drawing showing a flow for performing reaction force control by the stroke simulator; and
FIG. 5 is a drawing schematically showing a conventional master cylinder having a pedal feel simulator unit described in PTL 1.

### Description of Embodiments

An embodiment of the present invention will be described below using the drawings.

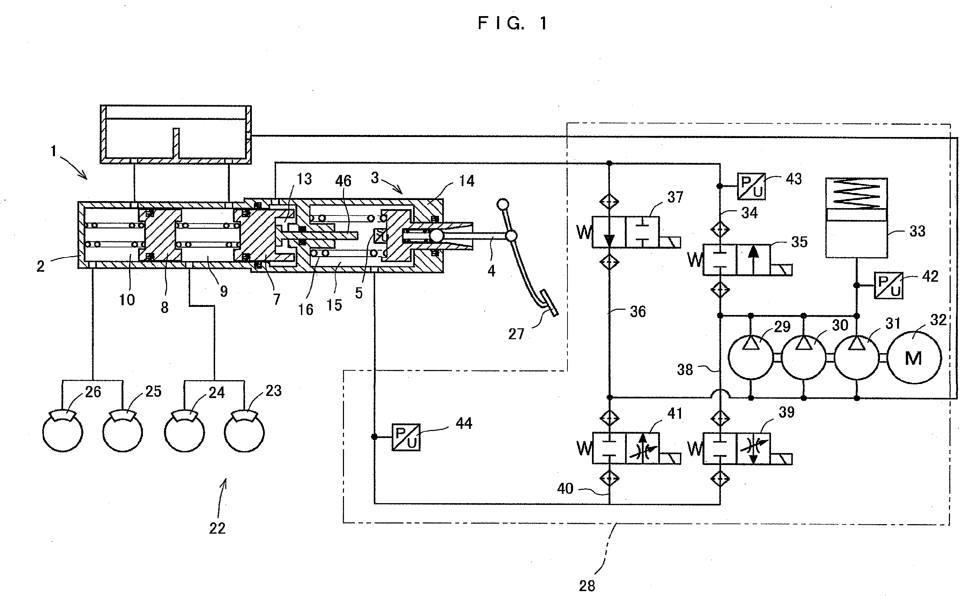

FIG. 1 is a drawing schematically showing a master cylinder having an example of an embodiment of a stroke simulator pertaining to the present invention and a brake system using this master cylinder. Detailed description of constituent elements of the present invention that are the same as the constituent elements of the master cylinder having the stroke simulator shown in FIG. 5 described above will be omitted by assigning the same reference signs thereto.

As shown in FIG. 1, the master cylinder 1 is used in a brake system 22 of this example. In the tandem master cylinder unit 2 of this master cylinder 1, the primary hydraulic chamber 9 is communicatively connected to brake cylinders 23 and 24 of one system, and the secondary hydraulic chamber 10 is communicatively connected to brake cylinders 25 and 26 of another system.

Further, a brake pedal 27 is coupled to the input shaft 4. When the driver depresses the brake pedal 27, an input is applied to the input shaft 4 and the input shaft 4 performs a forward stroke. Additionally, the simulator actuation piston 14 performs a forward stroke because of the forward stroke of the input shaft 4. In the master cylinder 1 of this example, the stroke sensor 5 is disposed on the simulator actuation piston 14. Consequently, the stroke sensor 5 detects the stroke of the simulator actuation piston 14, whereby the stroke of the input shaft 4 (in other words, the depression stroke of the brake pedal 27) is detected.

Moreover, the pedal feel simulator unit 3, which is a stroke simulator of the master cylinder 1, has a hydraulic actuation control system 28. This hydraulic actuation control system 28 is a hydraulic actuation control system that controls the supply and discharge of hydraulic fluid with respect to the power chamber 13 of the tandem master cylinder unit 2 on the basis of the pedal stroke of the brake pedal 27 to thereby control the hydraulic pressure in this power chamber 13 . That is, the hydraulic actuation control system 28 controls the braking forces of the brake system 22 on the basis of the pedal stroke of the brake pedal 27.

Additionally, in the master cylinder 1 of this example, this hydraulic actuation control system 28 performs a stroke simulation function. Consequently, in the master cylinder 1 of this example, the pedal feel simulator cartridge 17 described in PTL 1 for performing the stroke simulation function is not disposed.

The hydraulic actuation control system 28 has a predetermined number (three in the example shown in the drawing) of hydraulic pumps 29, 30, and 31; a pump drive motor (M) 32 that drives these hydraulic pumps 29, 30, and 31; an accumulator 33 that is disposed on the discharge sides of the hydraulic pumps 29, 30, and 31; a normally-closed first electromagnetic opening-and-closing valve 35 that is disposed in a passage 34 communicatively interconnecting the discharge sides of the hydraulic pumps 29, 30, and 31 and the power chamber 13 of the tandem master cylinder unit 2; a normally-open second electromagnetic opening-and-closing valve 37 that is disposed in a passage 36 communicatively interconnecting the suction sides of the hydraulic pumps 29, 30, and 31 and the power chamber 13 of the pedal feel simulator unit 3; a normally-closed first electromagnetic flow rate control valve 39 that is disposed in a passage 38 communicatively interconnecting the discharge sides of the hydraulic pumps 29, 30, and 31 and the simulator actuation hydraulic chamber 15 of the pedal feel simulator unit 3; a normally-closed second electromagnetic flow rate control valve 41 that is disposed in a passage 40 communicatively interconnecting the suction sides of the hydraulic pumps 29, 30, and 31 and the simulator actuation hydraulic chamber 15 of the pedal feel simulator unit 3; a first pressure sensor 42 that detects the hydraulic pressure in the accumulator 33; a second pressure sensor 43 that detects the hydraulic pressure in the power chamber 13; and a third pressure sensor 44 that detects the hydraulic pressure in the simulator actuation hydraulic chamber 15.

The first electromagnetic flow rate control valve 39 is a one-way valve that is capable of controlling the flow rate of the hydraulic fluid as a result of its valve lift being controlled and allows only a flow of the hydraulic fluid from the discharge sides of the hydraulic pumps 29, 30, and 31 to the simulator actuation hydraulic chamber 15 of the pedal feel simulator unit 3. Further, the second electromagnetic flow rate control valve 41 is also a one-way valve that is capable of controlling the flow rate of the hydraulic fluid as a result of its valve lift being controlled and allows only a flow of the hydraulic fluid from the simulator actuation hydraulic chamber 15 of the pedal feel simulator unit 3 to the suction sides of the hydraulic pumps 29, 30, and 31. The suction sides of the hydraulic pumps 29, 30, and 31 are communicatively connected to the reservoir tank 6.

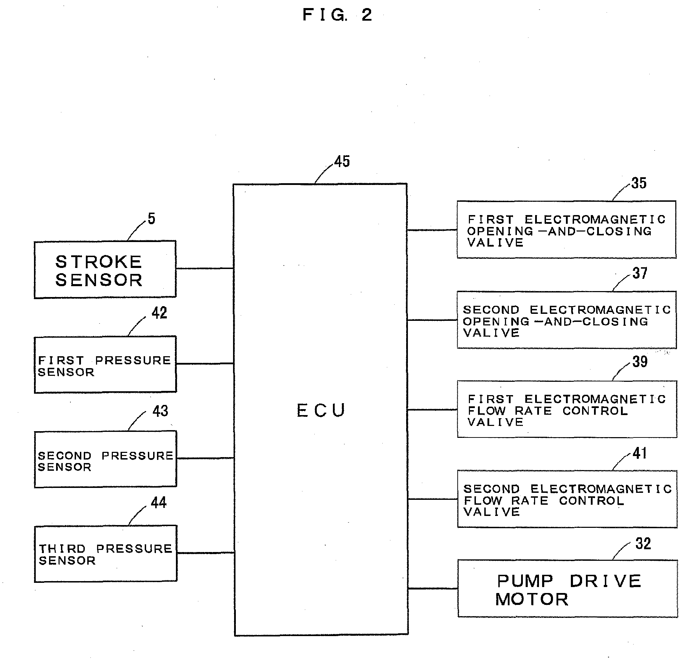

FIG. 2 is a block diagram for controlling brake actuation.

As shown in FIG. 2, the brake system 22 of this example is equipped with an electronic control unit (ECU) 45 in order to control brake actuation of the brake system 22. The stroke sensor 5 and the first to third pressure sensors 42, 43, and 44 are connected to this ECU 45, and the first and second electromagnetic opening-and-closing valves 35 and 37, the first and second electromagnetic flow rate control valves 39 and 41, and the pump drive motor 32 are also connected to this ECU 45. Consequently, a stroke signal of the simulator actuation piston 14 detected by the stroke sensor 5 (in other words, a stroke signal of the input shaft 4, a stroke signal of the brake pedal 27), a hydraulic signal of the accumulator 33 detected by the first pressure sensor 42, a hydraulic signal of the power chamber 13 detected by the second pressure sensor 43, and a hydraulic signal of the simulator actuation hydraulic chamber 15 detected by the third pressure sensor 44 are input to the ECU 45.

Additionally, the ECU 45 controls the driving of the pump drive motor 32 on the basis of the hydraulic signal of the accumulator 33 from the first pressure sensor 42, whereby a set hydraulic pressure set beforehand is always accumulated in the accumulator 33. Further, the ECU 45 controls actuation of the first and second electromagnetic opening-and-closing valves 35 and 37 on the basis of the stroke signal from the stroke sensor 5 to thereby supply hydraulic pressure from the accumulator 33 to the power chamber 13 and discharge hydraulic pressure to the reservoir tank 6. Additionally, because of the hydraulic pressure supplied to the power chamber 13, the primary piston 7 of the tandem master cylinder unit 2 is actuated such that brake hydraulic pressure is generated in the primary hydraulic chamber 9 and the secondary piston 8 is actuated such that brake hydraulic pressure is generated in the secondary hydraulic chamber 10. These brake hydraulic pressures are supplied to the brake cylinders 23, 24, 25, and 26, whereby the brake cylinders 23, 24, 25, and 26 generate braking forces and brakes are applied to the wheels using these braking forces . In that case, the ECU 45 controls the actuation of the first and second electromagnetic opening-and-closing valves 35 and 37 in such a way that the braking forces become braking forces corresponding to the pedal stroke of the brake pedal 27 on the basis of the stroke signal from the stroke sensor 5 and the hydraulic signal of the power chamber 13 from the second pressure sensor 43.

Moreover, the ECU 45 controls actuation of the first and second electromagnetic flow rate control valves 39 and 41 on the basis of the stroke signal from the stroke sensor 5 to thereby supply hydraulic pressure from the accumulator 33 to the simulator actuation hydraulic chamber 15 and discharge hydraulic pressure to the reservoir tank 6. Additionally, because of the hydraulic pressure supplied to the simulator actuation hydraulic chamber 15, a reaction force is transmitted via the simulator actuation piston 14 and the input shaft 4 to the brake pedal 27, and the driver perceives this reaction force. In that case, the ECU 45 controls the valve lifts of the first and second electromagnetic flow rate control valves 39 and 41 in such a way that the reaction force becomes a reaction force corresponding to the pedal stroke of the brake pedal 27 on the basis of the stroke signal from the stroke sensor 5 and the hydraulic signal of the simulator actuation hydraulic chamber 15 from the third pressure sensor 44.

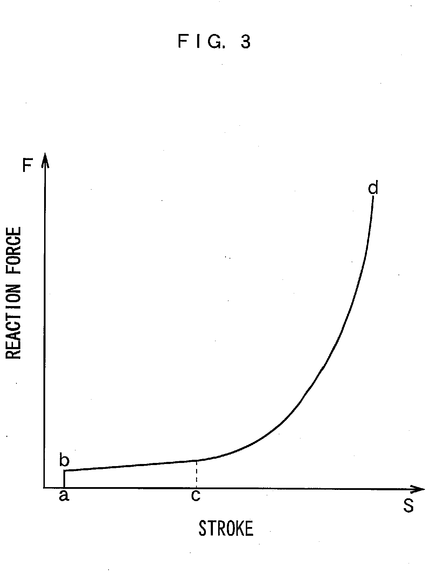

In the master cylinder 1 of this example, the relationship between the stroke S of the input shaft 4 and the reaction force F resulting from the hydraulic pressure in the simulator actuation hydraulic chamber 15 is set in such a way as to become the characteristic diagram of the reaction force F with respect to the stroke S of the input shaft 4 shown in FIG. 3. That is, when the brake pedal 27 is depressed, or in other words when the input shaft 4 performs a stroke, the first electromagnetic flow rate control valve 39 always closes and the second electromagnetic flow rate control valve 41 closes until the stroke S of the input shaft 4 becomes a first stroke a (which corresponds to a first stroke of the input shaft 4 of the present invention). Consequently, when the stroke of the input shaft 4 commences (in other words, when depression of the brake pedal 27 commences), the reaction force F substantially does not arise.

When the stroke S becomes the first stroke a, the second electromagnetic flow rate control valve 41 opens . At this time, the ECU 45 sets the valve lift of the second electromagnetic flow rate control valve 41 to an extremely small first valve lift (which corresponds to a first valve lift in the first stroke of the input shaft 4 of the present invention) to extremely limit the flow rate of the hydraulic fluid flowing through the second electromagnetic flow rate control valve 41. For this reason, even if the simulator actuation piston 14 tries to move forward because of the stroke of the brake pedal 27, the hydraulic fluid inside the simulator actuation hydraulic chamber 15 substantially does not flow out from the simulator actuation hydraulic chamber 15, the stroke S is in the position of the first stroke a, and the hydraulic pressure in the simulator actuation hydraulic chamber 15 rises. When this happens, the reaction force F is generated and increases. When the reaction force F becomes a predetermined reaction force b determined beforehand (which corresponds to a predetermined hydraulic pressure determined beforehand inside the simulator actuation hydraulic chamber 15 of the present invention), the ECU 45 sets the valve lift of the second electromagnetic flow rate control valve 41 to a second valve lift (which corresponds to a second valve lift in the first stroke of the input shaft 4 of the present invention) larger than the first valve lift. Because of this, the capacity of the simulator actuation hydraulic chamber 15 decreases in accompaniment with the forward movement of the simulator actuation piston 14, and the hydraulic fluid inside the simulator actuation hydraulic chamber 15 flows out from the simulator actuation hydraulic chamber 15 because of the stroke of the brake pedal 27. Consequently, the hydraulic pressure in the simulator actuation hydraulic chamber 15 slightly increases substantially in the manner of a straight line together with the increase of the stroke S, so the reaction force F also slightly increases substantially in the manner of a straight line.

When the stroke S of the input shaft 4 becomes a second stroke c (which corresponds to a second stroke of the input shaft 4 of the present invention) larger than the first stroke a, the ECU 45 gradually decreases the valve lift of the second electromagnetic flow rate control valve 41 from a large valve lift to a small valve lift together with the increase of the stroke S from the second valve lift. When this happens, the hydraulic fluid flowing through the second electromagnetic flow rate control valve 41 gradually becomes restricted. Because of this, the rate of increase of the hydraulic pressure inside the simulator actuation hydraulic chamber 15 corresponding to the stroke S of the brake pedal 27 gradually becomes larger. Consequently, the hydraulic pressure in the simulator actuation hydraulic chamber 15 increases substantially in the manner of a second-order straight line together with the increase of the stroke S, so the reaction force F also increases substantially in the manner of a second-order straight line. Additionally, this restriction of the valve lift of the second electromagnetic flow rate control valve 41 is performed until the reaction force F becomes a reaction force d set beforehand.

When the brake pedal 27 is returned (performs a return stroke), the second electromagnetic flow rate control valve 41 always closes and the first electromagnetic flow rate control valve 39 opens. The capacity of the simulator actuation hydraulic chamber 15 increases in accompaniment with the rearward movement of the simulator actuation piston 14, and the hydraulic pressure inside the simulator actuation hydraulic chamber 15 drops. At the same time, the hydraulic fluid is supplied from the accumulator 33 through the first electromagnetic flow rate control valve 39 to the simulator actuation hydraulic chamber 15. At this time, the ECU 45 controls the valve lift of the first electromagnetic flow rate control valve 39 and controls the hydraulic pressure inside the simulator actuation hydraulic chamber 15 in such a way that the braking forces appropriately gradually decrease to thereby give the relationship between the stroke S and the reaction force F a characteristic having an appropriate hysteresis with respect to when the input shaft 4 performs a forward stroke (in other words, when the brake pedal 27 is depressed).

When the brake pedal 27 returns to the non-actuated position and the brake system 22 returns to the non-actuated state shown in FIG. 1, the first electromagnetic opening-and-closing valve 35 closes and the second electromagnetic opening-and-closing valve 37 opens. Because of this, the brake hydraulic pressure in the tandem master cylinder unit 2 of the master cylinder 1 disappears and the braking is released. Further, the first and second electromagnetic flow rate control valves 39 and 41 close. At this time, a predetermined hydraulic pressure is maintained inside the simulator actuation hydraulic chamber 15.

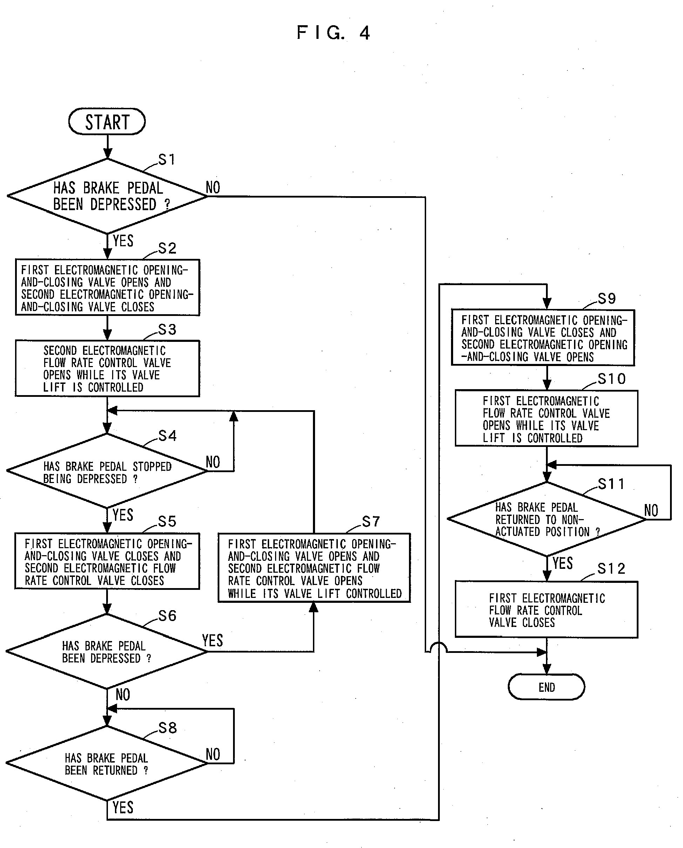

Next, reaction force control by the stroke simulator of this example will be described. FIG. 4 is a drawing showing a flow for performing reaction force control by the stroke simulator.

As shown in FIG. 4, in step S1 it is judged whether or not the brake pedal 27 has been depressed. When it is judged that the brake pedal 27 has not been depressed, the reaction force control ends. When it is judged in step S1 that the brake pedal 2 has been depressed, in step S2 the first electromagnetic opening-and-closing valve 35 opens and the second electromagnetic opening-and-closing valve 37 closes. Further, in step S3 the second electromagnetic flow rate control valve 41 opens while its valve lift is controlled (at this time, the first electromagnetic flow rate control valve 39 is in an initial state and closed).

Next, in step S4 it is judged whether or not the depression of the brake pedal 2 has been stopped midway. When it is judged that the depression of the brake pedal 2 has not been stopped midway, the process of step S4 is continued as is. When it is judged in step S4 that the depression of the brake pedal 2 has been stopped, in step S5 the first electromagnetic opening-and-closing valve 35 closes and the second electromagnetic flow rate control valve 41 closes. Because of this, the brake hydraulic pressure is maintained at the hydraulic pressure corresponding to the stroke of the brake pedal 2 at that time, and the hydraulic pressure inside the simulator actuation hydraulic chamber 15 is maintained at the hydraulic pressure at that time.

Next, in step S6 it is judged whether or not the brake pedal 2 has been depressed further after the depression of the brake pedal 2 was stopped midway. When it is judged that the brake pedal 2 has been depressed further, in step S7 the first electromagnetic opening-and-closing valve 35 opens and the second electromagnetic flow rate control valve 41 opens while its valve lift is controlled. Thereafter, the flow moves to step S4 and each of the processes from step S4 on are repeated. When it is judged in step S6 that the brake pedal 2 has not been depressed further, in step S8 it is judged whether or not the brake pedal 2 has been returned. When it is judged that the brake pedal has not been returned, the process of step S8 is continued as is. When it is judged in step S8 that the brake pedal has been returned, in step S9 the first electromagnetic opening-and-closing valve 35 closes and the second electromagnetic opening-and-closing valve 37 opens. Further, in step S10 the first electromagnetic flow rate control valve 39 opens while its valve lift is controlled. Because of this, the brake hydraulic pressure is reduced and the hydraulic fluid is supplied from the accumulator 33 to the simulator actuation hydraulic chamber 15 while its flow rate is controlled.

Next, in step S11 it is judged whether or not the brake pedal 2 has returned to the non-actuated position. When it is judged that the brake pedal 2 has not returned to the non-actuated position, the process of step S11 is continued as is. When it is judged in step S11 that the brake pedal 2 has returned to the non-actuated position, in step S12 the first flow rate control valve 39 closes. In this way, the hydraulic actuation control system 28 returns to the non-actuated state shown in FIG. 1 and the reaction force control ends.

Incidentally, when the hydraulic actuation control system 28 fails, the hydraulic fluid becomes no longer supplied from the hydraulic actuation control system 28 to the power chamber 13. Therefore, in the master cylinder 1 of this example, a pedal effort transmission rod 46 is disposed between the simulator actuation piston 14 and the primary piston 7. When the hydraulic actuation control system 28 is normal and the hydraulic fluid is capable of being supplied to the power chamber 13 and the simulator actuation hydraulic chamber 15, the simulator actuation piston 14 does not come into contact with the pedal effort transmission rod 46 even when the simulator actuation piston 14 performs a maximum forward stroke. Further, when the hydraulic actuation control system 28 fails, the simulator actuation piston 14 comes into contact with the pedal effort transmission rod 46 when the brake pedal 27 is depressed. Consequently, when the hydraulic actuation control system 28 fails, the pedal effort on the brake pedal 27 is transmitted to the primary piston 7 via the input shaft 4, the simulator actuation piston 14, and the pedal effort transmission rod 46. Because of this, even when the hydraulic actuation control system 28 fails, brake hydraulic pressure is generated in the tandem master cylinder unit 2 because of the depression of the brake pedal 27, and the brakes are reliably actuated.

According to the master cylinder 1 having the stroke simulator of this example, the hydraulic actuation control system 28 has the stroke simulation function. Because of this, in the master cylinder 1 of this example, the pedal feel simulator cartridge 17 shown in FIG. 5 and described in PTL 1 for performing the stroke simulation function becomes unnecessary. Additionally, the plural springs disposed in the pedal feel simulator cartridge 17 described in PTL 1 are not disposed, so the start-up load of the pedal feel simulator unit 3 can be reduced. Consequently, actuation of the stroke simulation function can be smoothly commenced.

Further, the depression load of the brake pedal 27 can be lightened, and the feeling of resistance caused by the spring forces of the plural springs can be reduced. As a result, a good pedal feeling that is the same as that of a conventional, typical brake system where the reaction force of the braking force is transmitted to the brake pedal can be obtained. In particular, the hydraulic fluid moves while its flow rate is controlled by the first and second electromagnetic flow rate control valves 39 and 41, so a response delay caused by volumetric movement of the hydraulic fluid arises, but this response delay becomes an alternative to the response delay in a conventional negative pressure brake systems, so it becomes possible to realize the pedal feeling of a conventional negative-pressure brake system.

Moreover, the stroke simulator and the master cylinder 1 can be compactly formed as a result of the pedal feel simulator cartridge 17 not being disposed, and the space for installing these can be reduced.

Moreover, the amount of change of the capacity of the simulator actuation hydraulic chamber 15 and the rate of change of the capacity can be controlled as a result of the valve lifts of the first and second electromagnetic flow rate control valves 39 and 41 being controlled in accordance with the pedal stroke of the brake pedal 27. Consequently, the hydraulic pressure of the hydraulic fluid in the simulator actuation hydraulic chamber 15, or in other words the reaction force, can be easily controlled in accordance with the pedal stroke. Moreover, by setting the magnitudes of the valve lifts of the first and second electromagnetic flow rate control valves 39 and 41 to desired magnitudes, it becomes possible to easily adjust reaction force characteristics with respect to the stroke of the brake pedal 27 to desired characteristics.

In a case where the hydraulic actuation control system 28 has failed, the pedal effort on the brake pedal 27 is transmitted to the primary piston 7 via the input shaft 4, the simulator actuation piston 14, and the pedal effort transmission rod 46. Consequently, even when the hydraulic actuation control system 28 fails, it becomes possible to cause the tandem master cylinder unit 2 to generate brake hydraulic pressure to reliably actuate the brakes.

The present invention is not limited to the example described above and is capable of a variety of design changes within the scope of matters described in the claims.

### Industrial Applicability

The stroke simulator, master cylinder, and brake system pertaining to the present invention are suitably utilizable for a stroke simulator that generates a reaction force simulated on the basis of the stroke of an input shaft, a master cylinder having this stroke simulator, and a brake system using this master cylinder.

## Claims

1. A stroke simulator comprising:
an input shaft (4) that performs a stroke as a result of an input being applied thereto;
a simulator actuation piston (14) that performs a stroke because of the stroke of the input shaft (4);
a simulator actuation hydraulic chamber (15) in which simulator actuation hydraulic pressure that applies a reaction force based on the stroke of the input shaft (4) to the simulator actuation piston (14) is generated by the stroke of the simulator actuation piston (14); and
a hydraulic actuation control system (28) that controls the simulator actuation hydraulic pressure on the basis of the stroke of the input shaft (4) by controlling the supply and discharge of hydraulic fluid to and from the simulator actuation hydraulic chamber (15), wherein the hydraulic actuation control system (28) has a first flow rate control valve (39) that supplies the hydraulic fluid to the simulator actuation hydraulic chamber (15) and a second flow rate control valve (41) that discharges the hydraulic fluid in the simulator actuation hydraulic chamber (15), wherein the valve lift of the first flow rate control valve (39) is controlled on the basis of the stroke of the input shaft (4), and the valve lift of the second flow rate control valve (41) is controlled on the basis of the stroke of the input shaft (4), wherein when the input shaft (4) has performed a stroke as a result of the input being applied thereto, the first flow rate control valve (39) is closed and the second flow rate control valve (41) is opened, **characterized in that** the valve lift of the second flow rate control valve (41) is set to an extremely small first valve lift when the stroke of the input shaft (4) has become a first stroke, is set to a second valve lift larger than the first valve lift when the hydraulic pressure inside the simulator actuation hydraulic chamber (15) has become a predetermined hydraulic pressure determined beforehand, and is set to become smaller from the second valve lift together with a further increase in the stroke of the input shaft (4) from when the stroke of the input shaft (4) has become a second stroke larger than the first stroke.

2. The stroke simulator according to claim 1, wherein
when the input shaft (4) has performed a return stroke, the first flow rate control valve (39) is opened and the second flow rate control valve (40) is closed.

3. A master cylinder (1) comprising a stroke simulator that -outputs a reaction force based on an input of an input shaft (4) and a master cylinder piston that is actuated by hydraulic fluid from a hydraulic actuation control system (28) and generates hydraulic pressure based on the input of the input shaft (4), wherein the stroke simulator is the stroke simulator according to any one of claims 1 or 2.

4. A brake system comprising a brake pedal, a master cylinder (1) which, as a result of an input shaft (4) performing a stroke on the basis of the depression of a brake pedal, generates brake hydraulic pressure based on the depression of the brake pedal (27), and brake cylinders (25, 26) that generate braking forces using the brake hydraulic pressure generated by the master cylinder (1), wherein the master cylinder (1) is the master cylinder (1) according to claim 3.

## Patentansprüche

1. Hubsimulator, der Folgendes umfasst:
eine Antriebswelle (4), die als Ergebnis eines auf sie aufgebrachten Eintrags einen Hub durchführt;
einen Simulatorbetätigungskolben (14), der einen Hub aufgrund des Hubs der Antriebswelle (4) durchführt;
eine Simulatorbetätigungshydraulikkammer (15), in der ein Simulatorbetätigungshydraulikdruck, der eine Reaktionskraft auf der Grundlage des Hubs der Antriebswelle (4) auf den Simulatorbetätigungskolben (14) aufbringt, durch den Hub des Simulatorbetätigungskolbens (14) erzeugt wird; und
ein Hydraulikbetätigungssteuersystem (28), das den Simulatorbetätigungshydraulikdruck auf der Grundlage des Hubs der Antriebswelle (4) durch Steuern der Zufuhr und des Ausstoßens von Hydraulikflüssigkeit zu und von der Simulatorbetätigungshydraulikkammer (15) steuert, wobei das Hydraulikbetätigungssystem (28) eine erstes Durchflussmengensteuerventil (39), das der Simulatorbetätigungshydraulikkammer (15) die Hydraulikflüssigkeit zuführt, und ein zweites Durchflussmengensteuerventil (41), das die Hydraulikflüssigkeit in die Simulatorbetätigungshydraulikkammer (15) ausstößt, besitzt, wobei der Ventilhub des ersten Durchflussmengensteuerventils (39) auf der Grundlage des Hubs der Antriebswelle (4) gesteuert wird und der Ventilhub des zweiten Durchflussmengensteuerventils (41) auf der Grundlage des Hubs der Antriebswelle (4) gesteuert wird, wobei dann, wenn die Antriebswelle (4) einen Hub als Ergebnis des auf sie aufgebrachten Eintrags durchgeführt hat, das erste Durchflussmengensteuerventil (39) geschlossen ist und das zweite Durchflussmengensteuerventil (41) geöffnet ist, **dadurch gekennzeichnet, dass** der Ventilhub des zweiten Durchflussmengensteuerventils (41) auf einen extrem kleinen ersten Ventilhub eingestellt ist, wenn der Hub der Antriebswelle (4) einen ersten Hub erreicht hat, und auf einen zweiten Ventilhub, der größer als der erste Ventilhub ist, eingestellt ist, wenn der Hydraulikdruck in der Simulatorbetätigungshydraulikkammer (15) einen vorgegebenen Hydraulikdruck, der vorher bestimmt wurde, erreicht hat, und eingestellt ist, ausgehend von dem zweiten Ventilhub gemeinsam mit einer weiteren Erhöhung des Hubs der Antriebswelle (4) kleiner zu werden, ausgehend von dem Zeitpunkt, zu dem der Hub der Antriebswelle (4) einen zweiten Hub, der größer als der erste Hub ist, erreicht hat.

2. Hubsimulator nach Anspruch 1, wobei
dann, wenn die Antriebswelle (4) einen Rückhub durchgeführt hat, das erste Durchflussmengensteuerventil (39) geöffnet ist und das zweite Durchflussmengensteuerventil (40) geschlossen ist.

3. Hauptzylinder (1), der einen Hubsimulator, der eine Reaktionskraft auf der Grundlage eines auf eine Antriebswelle (4) aufgebrachten Eintrags ausgibt, und einen Hauptzylinderkolben, der durch Hydraulikflüssigkeit von einem Hydraulikbetätigungssteuersystem (28) betätigt wird und einen Hydraulikdruck auf der Grundlage des Eintrags der Antriebswelle (4) erzeugt, umfasst, wobei der Hubsimulator der Hubsimulator nach einem der Ansprüche 1 oder 2 ist.

4. Bremssystem, das Folgendes umfasst: ein Bremspedal, einen Hauptzylinder (1), der als Ergebnis des Durchführens eines Hubs einer Antriebswelle (4) auf der Grundlage des Niederdrückens eines Bremspedals einen Bremshydraulikdruck auf der Grundlage des Niederdrückens des Bremspedals (27) erzeugt, und Bremszylinder (25, 26), die Bremskräfte unter Verwendung des von dem Hauptzylinder (1) erzeugten Bremshydraulikdrucks erzeugen, wobei der Hauptzylinder (1) der Hauptzylinder (1) nach Anspruch 3 ist.

## Revendications

1. Simulateur de course, comprenant:
un arbre d'entrée (4) qui effectue une course suite à une entrée qui lui est appliquée,
un piston d'entraînement du simulateur (14) qui effectue une course du fait de la course de l'arbre d'entrée (4),
une chambre hydraulique d'entraînement du simulateur (15) dans laquelle une pression hydraulique d'entraînement du simulateur qui applique une force de réaction fondée sur la course de l'arbre d'entrée (4) au piston d'entraînement du simulateur (14) est générée par la course du piston d'entraînement du simulateur (14),
un système de commande d'entraînement hydraulique (28) qui commande la pression hydraulique d'entraînement du simulateur sur le fondement de la course de l'arbre d'entrée (4) en commandant l'entrée et la sortie de fluide hydraulique vers et à partir de la chambre hydraulique d'entraînement du simulateur (15), le système de commande d'entraînement hydraulique (28) ayant une première soupape de commande de débit (39) qui fournit le fluide hydraulique à la chambre hydraulique d'entraînement du simulateur (15) et une seconde soupape de commande de débit (41) qui refoule le fluide hydraulique de la chambre hydraulique d'entraînement du simulateur (15), la levée de la première soupape de commande du débit (39) étant commandée sur le fondement de la course de l'arbre d'entrée (4) et la levée de la seconde soupape de commande du débit (41) étant commandée sur le fondement de la course de l'arbre d'entrée (4), lorsque l'arbre d'entrée (4) a effectué une course suite à l'entrée qui lui est appliquée, la première soupape de commande du débit (39) étant fermée et la seconde soupape de commande du débit (41) étant ouverte, **caractérisé en ce que** la levée de la seconde soupape de commande du débit (41) est réglée à une première valeur de levée extrêmement faible lorsque la course de l'arbre d'entrée (4) est devenue égale à une première course, est réglée à une seconde valeur de levée supérieure à la première valeur de levée de la soupape lorsque la pression hydraulique à la partie interne de la chambre hydraulique d'entraînement du simulateur (15) est devenue égale à une pression hydraulique prédéfinie, déterminée auparavant, et est réglée de façon à devenir inférieure à la seconde valeur de levée de la soupape lors de la poursuite de l'augmentation de la course de l'arbre d'entrée (4) à partir du moment ou la course de l'arbre d'entrée (4) est devenue égale à une seconde course supérieure à la première course.

2. Simulateur de course, conforme à la revendication 1, dans lequel lorsque l'arbre d'entrée (4) a effectué une course de retour, la première soupape de commande du débit (39) est ouverte et la seconde soupape de commande du débit (40) est fermée.

3. Maître cylindre (1) comprenant un simulateur de course qui délivre en sortie une force de réaction sur le fondement de l'entrée d'un arbre d'entrée (4) et un piston de maître cylindre qui est entraîné par un fluide hydraulique à partir d'un système de commande d'entraînement hydraulique (28) et génère une pression hydraulique sur le fondement de l'entrée de l'arbre d'entrée (4), le simulateur de course étant un simulateur de course conforme à l'une quelconques des revendications 1 et 2.

4. Système de freinage, comprenant une pédale de frein, un maître cylindre (1), qui, suite au fait qu'un arbre d'entrée (4) effectue une course, sur le fondement de la dépression de la pédale de frein génère une pression hydraulique de frein fondée de la dépression de la pédale de frein (27), et des cylindres de frein (25, 26) qui génèrent des forces de freinage en utilisant la pression hydraulique de frein générée par le maître cylindre (1), le maître cylindre (1) étant un maître cylindre (1) conforme à la revendication 3.
